# EUROPEAN PATENT APPLICATION

(11) **EP 4 361 231 A1**
(43) Date of publication of application: **01.05.2024**
(21) Application number: 22828220.8
(22) Date of filing: 08.06.2022
(51) Int. Cl.: C09K 3/00, C01G 41/00

(54) **INFRARED ABSORBING COMPOSITE MICROPARTICLES, INFRARED ABSORBING MICROPARTICLE DISPERSION LIQUID, AND INFRARED ABSORBING MICROPARTICLE DISPERSION**

(30) Priority: 22.06.2021 JP 2021103089
(71) Applicant: SUMITOMO METAL MINING CO., LTD., Tokyo 105-8716 (JP)
(72) Inventor: SAKO Mika, Isa-shi, Kagoshima 895-2501 (JP); CHONAN Takeshi, Isa-shi, Kagoshima 895-2501 (JP)
(74) Representative: TBK
(86) International application number: PCT/JP2022/023057
(87) International publication number: WO 2022/270303

(57) **Abstract**

There is provided infrared absorbing composite fine particles whose surfaces are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound, wherein a silicon compound is present in one or more locations selected from within the coating film, on the coating film, and the vicinity of surfaces of the infrared absorbing composite fine particles.

## Description

### Technical Field

The present invention relates to surface-treated infrared absorbing fine particles whose surfaces are coated with a specified coating film that transmits light in a visible region and absorbs light in an infrared region, which are infrared absorbing composite fine particles that are further added with a silicon compound.

### Description of Related Art

In recent years, demand for infrared absorbers is rapidly increasing, and many patents related to infrared absorbers have been proposed. When considering these proposals from a functional perspective, for example, there are products that block out light in a near-infrared region while taking in enough visible light and suppress indoor temperature rises while maintaining brightness.

The present inventors provides Patent document 1 to disclose surface-treated infrared absorbing fine particles in which surfaces of tungsten oxide fine particles and/or composite tungsten oxide fine particles that are infrared absorbing fine particles and having excellent heat and humidity resistance and excellent infrared shielding properties, are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound, and a method for producing the same.

### Prior Art Document

### Patent Document

[Patent Document 1] International Publication No. 2019/093524

### Summary of the Invention

### Problem to be solved by the invention

According to the study by the present inventors, it is found that in an infrared absorbing material (film, resin sheet, etc.) containing the tungsten oxide fine particles and/or composite tungsten oxide fine particles, water vapor or water in the air may gradually penetrate into a solid resin contained in the optical component, depending on a usage condition and a method. It is also found that when the water vapor or water gradually penetrates into the solid resin, the surface of the tungsten oxide fine particles decomposes, and the transmittance of light with a wavelength of 200 to 2600 nm increases over time, resulting in increase of a transmittance of light with a wavelength of 200 to 2600 nm over time and gradual decrease of an infrared absorption performance of the infrared absorbing material.

In the present invention, the term "solid resin" is a concept that refers to a polymeric medium that is solid at room temperature, including polymeric media other than three-dimensionally crosslinked ones (sometimes referred to as "matrix resin" in the present invention).

Under the above circumstance, the present inventors disclose in Patent document 1 surface-treated infrared absorbing fine particles in which surfaces of tungsten oxide fine particles and/or composite tungsten oxide fine particles that are infrared absorbing fine particles and having excellent heat and humidity resistance and excellent infrared shielding properties, are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound, and a method for producing the same.

However, the infrared absorbing material is basically used outdoors due to their characteristics and is often required to have high weather resistance, and as a demand in the market increase year by year, heat resistance is also required for the infrared shielding fine particles disclosed in Patent document 1.

The present invention was made under the above circumstances, and an object of the present invention is to provide surface-treated infrared absorbing fine particles with excellent heat resistance and excellent infrared absorbing properties, and an infrared absorbing fine particle dispersion liquid and an infrared absorbing fine particle dispersion body using the surface-treated infrared absorbing fine particles.

### Means for solving the Problem

To solve the above problem, the present inventors conducted research regarding a configuration for improving the heat resistance of the surface-treated infrared absorbing fine particles by using the surface-treated infrared absorbing fine particles with excellent optical properties, as the infrared absorbing fine particles. As a result, the present inventors came up with a structure in which a compound capable of improving the heat resistance of the surface-treated fine particles is uniformly dispersed in one or more locations selected from within the coating film, on the coating film, and the vicinity of surfaces of the surface-treated fine particles.

The present inventors continued their research, and came up with a silicon compound used as a compound that improves the heat resistance of the above-described surface-treated infrared absorbing fine particles and having excellent affinity for the coating film. Then, as a result of further research, the present inventors came up with an addition method that minimizes the influence of the silicon compound on the dispersibility of the surface-treated infrared absorbing fine particles and surface-treated infrared absorbing fine particle dispersion body.

That is, the present inventors came up with surface-treated infrared-absorbing fine particle dispersion liquid, surface-treated infrared-absorbing fine particle dispersion powder, and surface-treated infrared-absorbing fine particle dispersion body, in which a silicon compound is added to surface-treated infrared-absorbing fine particles, and it is found that the surface-treated infrared absorbing fine particles have excellent heat resistance.

Further, it is found that the surface-treated infrared absorbing fine particles, the surface-treated infrared absorbing fine particle powder containing the surface-treated infrared absorbing fine particles, an infrared absorbing fine particle dispersion body, etc., produced using an infrared absorbing fine particle dispersion liquid in which the surface-treated infrared absorbing fine particles are dispersed in an appropriate medium, have excellent heat resistance and excellent infrared absorption properties. Thus, the present invention is achieved.

That is, in order to solve the above problem, first invention provides infrared absorbing composite fine particles whose surfaces are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound,
wherein a silicon compound is present in one or more locations selected from within the coating film, on the coating film, and the vicinity of surfaces of the infrared absorbing composite fine particles.

Second invention provides the infrared absorbing composite fine particles according to the first invention, wherein the coating film has a thickness of 0.5 nm or more.

Third invention provides the infrared absorbing composite fine particles according to the first or second invention, wherein the metal chelate compound or the metal cyclic oligomer compound contains one or more metal elements selected from Al, Zr, Ti, Si, and Zn.

Fourth invention provides the infrared absorbing composite fine particles according to any one of the first to third inventions, wherein the metal chelate compound or the metal cyclic oligomer compound has one or more selected from an ether bond, an ester bond, an alkoxy group, and an acetyl group.

Fifth invention provides the infrared absorbing composite fine particles according to any one of the first to fourth inventions, wherein the silicon compound is silica fine particles.

Sixth invention provides the infrared absorbing composite fine particles according to any one of the first to fifth inventions, wherein the infrared absorbing fine particles are infrared absorbing composite tungsten oxide fine particles expressed by a general formula MxWyOz (wherein, M is one or more elements selected from H, He, alkali metal, alkaline earth metal, rare earth element, Mg, Zr, Cr, Mn, Fe, Ru, Co, Rh, Ir, Ni, Pd, Pt, Cu, Ag, Au , Zn, Cd, Al, Ga, In, Tl, Si, Ge, Sn, Pb, Sb, B, F, P, S, Se, Br, Te, Ti, Nb, V, Mo, Ta, Re, Be , Hf, Os, Bi, I, and Yb, W is tungsten, O is oxygen, 0.001 ≤ x/y ≤ 1, 2.0 ≤ z/y ≤ 3. 0).

Seventh invention provides the infrared absorbing composite fine particles according to any one of the first to sixth inventions, wherein a carbon concentration is 0.2% by mass or more and 5.0% by mass or less.

Eighth invention provides an infrared absorbing fine particle dispersion liquid in which the infrared absorbing composite fine particles according to any one of the first to seventh inventions are dispersed in a liquid medium.

Nineth invention provides the infrared absorbing fine particle dispersion liquid according to the eighth invention, wherein the liquid medium is one or more liquid medium selected from an organic solvent, oil and fat, a liquid plasticizer, a compound that becomes polymerized by curing, and water.

Tenth invention provides an infrared absorbing fine particle dispersion body in which the infrared absorbing composite fine particles according to any one of the first to seventh inventions are dispersed in a solid resin.

Eleventh invention provides the infrared absorbing fine particle dispersion body according to the tenth invention, wherein the solid resin is one or more resins selected from fluororesin, PET resin, acrylic resin, polyamide resin, vinyl chloride resin, polycarbonate resin, olefin resin, epoxy resin, and polyimide resin.

Twelfth invention provides an infrared absorbing fine particle dispersion body which is a dried solidified product of the infrared absorbing fine particle dispersion liquid according to the eighth or ninth invention.

### Advantage of the Invention

By using the surface-treated infrared absorbing fine particles according to the present invention, it is possible to produce an infrared absorbing fine particle dispersion body that has high heat resistance and excellent infrared absorption properties.

### Brief Description of the Drawings

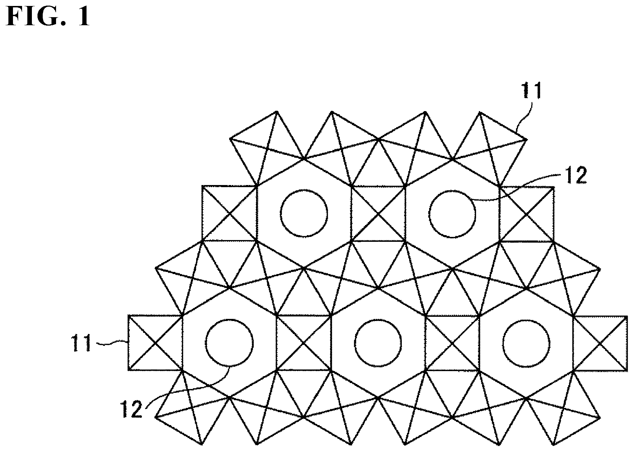

FIG. 1 is a schematic plan view of a crystal structure of a composite tungsten oxide having a hexagonal crystal structure.

### Detailed Description of the Invention

Hereinafter, this embodiment will be described in detail in the following order: [1] Infrared absorbing fine particles, [2] Surface treatment agent used for surface coating of infrared absorbing fine particles, [3] Method for surface coating of infrared absorbing fine particles, [4] Silicon compound addition and infrared absorbing composite fine particles, [5] Silicon compound addition method, [6] Infrared absorbing fine particle dispersion liquid, infrared absorbing fine particle dispersion body, infrared absorbing base material, and articles obtained using infrared absorbing composite fine particles.

In this embodiment, in order to impart heat and humidity resistance to infrared absorbing fine particles, "a coating film formed using one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound", is sometimes simply referred to as a "coating film".

### [1] Infrared absorbing fine particles

In general, it is known that a material containing free electrons exhibits a reflection/absorption response to electromagnetic waves around a solar radiation region with a wavelength of 200 nm to 2600 nm due to plasma vibration. When powder of such a substance is made into particles smaller than a wavelength of light, it is known that geometric scattering in the visible light region (wavelengths from 380 nm to 780 nm) is reduced and transparency in the visible light region can be obtained.

In this embodiment, "transparency" is used to mean "less scattering and high transparency for light in the visible light region."

On the other hand, it is known that WO₃ with oxygen vacancies, and composite tungsten oxides in which positive elements such as Na is added to WO₃, are conductive materials and materials with free electrons. Then, analysis of single crystals of materials with these free electrons suggests that the free electrons respond to light in the infrared region.

The present inventors found that there is a range that is particularly effective as infrared absorbing fine particles in a specific part of a composition range of tungsten and oxygen, and have come up with the composite tungsten oxide fine particles that are transparent in the visible light region and absorbing in the infrared region.

Here, the composite tungsten oxide fine particles, which are infrared absorbing fine particles according to this embodiment, will be explained.

By adding element M, which will be described later, to the above-described WO₃ to form a composite tungsten oxide, free electrons are generated in the WO₃, and strong absorption property derived from the free electrons are developed particularly in the near-infrared region, making the composite tungsten oxide effective as near-infrared absorbing fine particles around 1000 nm.

That is, for the WO₃, by performing combined use of controlling oxygen and adding the element M that generates free electrons, more efficient infrared absorbing fine particles can be obtained. When the general formula of the infrared absorbing fine particles thus obtained by the combined use of controlling the amount of oxygen and adding the element M that generates free electrons, is represented by MxWyOz (M is the above-described element M, W is tungsten, and O is oxygen), the infrared absorbing fine particles that satisfy the relationships of 0.001 ≤ x/y ≤ 1 and 2.0 ≤ z/y ≤ 3.0 are desirable.

First, the value of x/y indicating the addition amount of the element M will be explained. When the value of x/y is greater than 0.001, a sufficient amount of free electrons will be generated in the composite tungsten oxide and a desired infrared absorption effect can be obtained. Then, as the addition amount of the element M increases, the amount of supplied free electrons increases and the infrared absorption efficiency also increases, but this effect is saturated when the value of x/y is about 1. Further, it is preferable for the value of x/y to be less than 1, because it is possible to avoid a formation of an impurity phase in the infrared absorbing fine particles.

Further, the element M is preferably one or more element selected from H, He, alkali metal, alkaline earth metal, rare earth element, Mg, Zr, Cr, Mn, Fe, Ru, Co, Rh, Ir, Ni, Pd, Pt, Cu, Ag, Au, Zn , Cd, Al, Ga, In, Tl, Si, Ge, Sn, Pb, Sb, B, F, P, S, Se, Br, Te, Ti, Nb, V, Mo, Ta, Re, Be, Hf, Os, Bi, I, and Yb.

Here, from a viewpoint of stability in the MxWyOz added with element M, the element M is more preferably one or more element selected from an alkali metal, alkaline earth metal, rare earth element, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, and Re. Then, from a viewpoint of improving optical properties and weather resistance as infrared absorbing fine particles, the element M more preferably belongs to an alkali metal, an alkaline earth metal element, a transition metal element, a group 4B element, or a group 5B element.

Next, the value of z/y indicating the control of the amount of oxygen will be explained. Regarding the value of z/y, in the composite tungsten oxide represented by MxWyOz, the same mechanism as in the above-described tungsten oxide represented by WyOz works, and also when z/y=3.0 or 2.0 ≤ z/y ≤ 2, free electrons are also supplied due to the addition amount of the element M described above. Therefore, 2.0 ≤ z/y ≤ 3.0 is preferable, 2.2 ≤ z/y ≤ 3.0 is more preferable, 2.45 ≤ z/y ≤ 3.0 is still more preferable.

Further, when the composite tungsten oxide fine particles have a hexagonal crystal structure, the fine particles have improved transmission in the visible light region and improved absorption in the infrared region. This will be explained with reference to FIG. 1, which is a schematic plan view of this hexagonal crystal structure.

In FIG. 1, six octahedrons formed by WOe units indicated by reference numeral 11 are assembled to form a hexagonal void, and in the void, the element M indicated by reference numeral 12 is arranged to form one unit, and a large number of this one unit are aggregated to form a hexagonal crystal structure.

Then, in order to improve the transmission of light in the visible light region and the absorption of light in the infrared region, it is sufficient that the unit structure explained using FIG. 1 is contained in the composite tungsten oxide fine particles. The composite tungsten oxide fine particles may be crystalline or amorphous.

When cations of the element M are added and present in the hexagonal voids, the transmission of light in the visible light region is improved, and the absorption of light in the infrared region is improved. Here, generally, when the element M having a large ionic radius is added, the hexagonal crystal is likely to be formed. Specifically, when Cs, K, Rb, Tl, In, Ba, Li, Ca, Sr, Fe, and Sn are added, hexagonal crystals are likely to be formed. Of course, elements other than these may be used as long as the above-described element M is present in the hexagonal void formed by the WOe unit, and the element is not limited to the above-described elements.

When the composite tungsten oxide fine particles having the hexagonal crystal structure have a uniform crystal structure, an addition amount of the element M is preferably 0.2 or more and 0.5 or less, and more preferably 0.33 in x/y value. Due to the value of x/y being 0.33, it is considered that the above-described element M is arranged in all the hexagonal voids.

Further, the composite tungsten oxide other than hexagonal, such as tetragonal or cubic, is also effective as infrared absorbing fine particles. The absorption position in the infrared region tends to change depending on the crystal structure, and the absorption position tends to move toward a longer wavelength in an order of cubic < tetragonal < hexagonal. Further, accompanied thereby, an order of lower absorption in the visible light region is hexagonal, tetragonal, cubic. Accordingly, it is preferable to use hexagonal composite tungsten oxide for applications that transmit more light in the visible light region and block more light in the infrared region. However, the trend in optical properties described here are just a general trend and varies depending on the type of additive element, addition amount, and amount of oxygen, and the present invention is not limited thereto.

The infrared-absorbing fine particles containing composite tungsten oxide fine particles according to this embodiment largely absorb light in the near-infrared region, particularly in the vicinity of a wavelength of 1000 nm, so their transmitted color tone often ranges from blue to green.

Further, the dispersed particle size of the composite tungsten oxide fine particles in the infrared absorbing fine particles can be selected depending on the purpose of use.

First, when used in applications where transparency is desired to be maintained, it is preferable to have a particle size of 800 nm or less. This is because particles smaller than 800 nm do not completely block light due to scattering, and can maintain visibility in the visible light region and at the same time efficiently maintain transparency. Particularly when emphasis is placed on transparency in the visible light region, it is preferable to further consider scattering by particles.

When placing importance on reducing scattering caused by these particles, a dispersed particle size is 200 nm or less, preferably 100 nm or less. The reason is as follows: when a dispersed particle size of the particles is small, the following situation can be prevented: the scattering of light in the visible light region with a wavelength of 400 nm to 780 nm due to geometric scattering or Mie scattering is reduced, and as a result, an infrared absorbing film becomes like frosted glass, and clear transparency cannot be obtained. That is, when the dispersed particle size becomes 200 nm or less, the above-described geometric scattering or Mie scattering decreases and a Rayleigh scattering region appears. This is because in the Rayleigh scattering region, scattered light is reduced in proportion to the sixth power of a particle size, so as the dispersed particle size decreases, scattering decreases and transparency improves.

Further, when the dispersed particle size becomes 100 nm or less, an amount of scattered light becomes extremely small, which is preferable. From a viewpoint of avoiding light scattering, it is preferable that the dispersed particle size is small, and when the dispersed particle size is 1 nm or more, industrial production is easy.

By setting the dispersed particle size to 800 nm or less, the haze value of the infrared absorbing fine particle dispersion body in which the infrared absorbing fine particles according to this embodiment are dispersed in a medium, can be 30% or less with a visible light transmittance of 85% or less. If the haze is greater than 30%, the infrared absorbing fine particle dispersion body will look like frosted glass and clear transparency cannot be obtained.

The dispersed particle size of the infrared absorbing fine particles can be measured using an ELS-8000 manufactured by Otsuka Electronics Co., Ltd., etc., which is based on a dynamic light scattering method.

Further, in the composite tungsten oxide fine particles, so-called "Magneli phase" having a composition ratio represented by 2.45 ≤ z/y ≤ 2.999 is chemically stable and has good absorption properties in the infrared region, and is therefore preferable as infrared absorbing fine particles.

Further, from a viewpoint of exhibiting excellent infrared absorption properties, the crystallite size of the infrared absorbing fine particles is preferably 1 nm or more and 200 nm or less, more preferably 1 nm or more and 100 nm or less, and even more preferably 10 nm or more and 70 nm or less. To measure the crystallite size, measurement of an X-ray diffraction pattern by a powder X-ray diffraction method (θ-2θ method) and analysis by a Rietveld method are used. The X-ray diffraction pattern can be measured using, for example, a powder X-ray diffractometer "X'Pert-PRO/MPD" manufactured by PANalytical, Inc., Spectris Co., Ltd.

### [2] Surface treatment agent used for surface coating of infrared absorbing fine particles

In this embodiment, surface-treated infrared absorbing fine particles are obtained by surface-coating the surfaces of the infrared absorbing fine particles with a surface treatment agent to be described later.

The surface treatment agent used for surface-coating of the infrared absorbing fine particles according to this embodiment is one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound.

Then, from a viewpoint that the metal chelate compound and the metal cyclic oligomer compound are preferably metal alkoxides, metal acetylacetonates, and metal carboxylates, it is preferable to have one or more selected from ether bonds, ester bonds, alkoxy groups, and acetyl groups.

Here, the surface treatment agent according to this embodiment will be explained in the following order: (1) Metal chelate compound and (2) Metal cyclic oligomer compound, (3) Hydrolysis product and polymer of metal chelate compound and metal cyclic oligomer compound, and (4) Addition amount of surface treatment agent.

### (1) Metal chelate compound

The metal chelate compound used in this embodiment is preferably one or more selected from Al-based, Zr-based, Ti-based, Si-based, and Zn-based chelate compounds containing an alkoxy group.

Examples of aluminum-based chelate compounds include aluminum alcoholates such as aluminum ethylate, aluminum isopropylate, aluminum sec-butyrate, mono-sec-butoxyaluminum diisopropylate, or polymers thereof, ethyl acetoacetate aluminum diisopropylate, aluminum tris (ethylacetoacetate), octylacetoacetate aluminum diisopropylate, stearyl acetoaluminum diisopropylate, aluminum monoacetylacetonate bis(ethylacetoacetate), aluminum tris(acetylacetonate), etc.

These compounds are aluminum chelate compound containing alkoxy group obtained by dissolving aluminum alcoholate in an aprotic solvent, petroleum solvent, hydrocarbon solvent, ester solvent, ketone solvent, ether solvent, amide solvent, etc., and adding β-diketone, β-ketoester, monohydric or polyhydric alcohol, fatty acid, etc., to this solution, heating to reflux, and causing a substitution reaction of a ligand to occur.

Examples of zirconia-based chelate compounds include zirconium alcoholates such as zirconium ethylate and zirconium butyrate, or polymers thereof, zirconium tributoxy stearate, zirconium tetraacetylacetonate, zirconium tributoxyacetylacetonate, Zirconium dibutoxy bis (acetylacetonate), zirconium tributoxy ethyl acetoacetate, zirconium butoxy acetylacetonate bis (ethylacetoacetate), etc.

Examples of titanium-based chelate compounds include titanium alcoholates such as methyl titanate, ethyl titanate, isopropyl titanate, butyl titanate, 2-ethylhexyl titanate, and polymers thereof, titanium acetylacetonate, titanium tetraacetylacetonate, titanium octylene glycolate, titanium ethylacetoacetate, titanium lactate, titanium triethanolaminate, etc.

Examples of silicon-based chelate compounds include tetrafunctional silane compounds represented by the general formula: Si(OR)₄ (where R is the same or different monovalent hydrocarbon group having 1 to 6 carbon atoms) or hydrolysis products thereof. Specific examples of the tetrafunctional silane compound include tetramethoxysilane, tetraethoxysilane, tetrapropoxysilane, and tetrabutoxysilane. Also included are silane monomers (or oligomer) in which part or all of the alkoxy groups of these alkoxysilane monomers are hydrolyzed to become silanol (Si-OH) groups, and polymers that are self-condensed through a hydrolysis reaction.

Further, hydrolysis products of tetrafunctional silane compounds (there is no suitable terminology to designate an entire intermediate of tetrafunctional silane compounds.) include a silane monomer in which part or all of the alkoxy groups are hydrolyzed to become silanol (Si-OH) groups, quaternary to pentamer oligomers and polymers with a weight average molecular weight (Mw) of about 800 to 8000 (silicone resin). Not all of the alkoxysilyl groups (Si-OR) in the alkoxysilane monomer are hydrolyzed into silanol (Si-OH) during a hydrolysis reaction process.

Preferred examples of the zinc-based chelate compound include zinc salts of organic carboxylic acids such as zinc octylate, zinc laurate, and zinc stearate, acetylacetone zinc chelate, benzoylacetone zinc chelate, dibenzoylmethane zinc chelate, ethyl acetoacetate zinc chelate, etc.

### (2) Metal cyclic oligomer compound

The metal cyclic oligomer compound according to this embodiment is preferably one or more selected from Al-based, Zr-based, Ti-based, Si-based, and Zn-based cyclic oligomer compounds. Among them, cyclic aluminum oligomer compounds such as cyclic aluminum oxide octylate, etc., can be preferably exemplified.

### (3) Hydrolysis product and polymer of metal chelate compound and metal cyclic oligomer compound

According to this embodiment, surface-treated infrared absorbing fine particles according to this embodiment is obtained by a coating surfaces of the infrared absorbing fine particles of this embodiment, with a hydrolysis product in which an entire amount of alkoxy groups, ether bonds, and ester bonds are hydrolyzed to become hydroxyl groups or carboxyl groups, and partial hydrolysis products in which some of them are hydrolyzed, or/and a polymer that is self-condensed through the hydrolysis reaction in the metal chelate compound and metal cyclic oligomer compound described above, to form a coating film.

That is, the hydrolysis product in this embodiment is a concept that includes the partial hydrolysis product.

However, for example, in a reaction system where an organic solvent such as alcohol is involved, generally in terms of stoichiometry, not all of the alkoxy groups, ether bonds, and ester bonds of the metal chelate compound or metal cyclic oligomer compound used as the starting material may be hydrolyzed, depending on the type and concentration of the organic solvent, even when there is sufficient water in the system. Accordingly, depending on the conditions of the surface coating method described below, even after hydrolysis, an amorphous state is probable in which carbon C is incorporated into its molecules.

As a result, the coating film may contain an undecomposed metal chelate compound and/or a metal cyclic oligomer compound, but there is no particular problem as long as an amount is small.

### (4) Addition amount of surface treatment agent

An addition amount of the metal chelate compound and metal cyclic oligomer compound described above is preferably 0.1 parts by mass or more and 1000 parts by mass or less in terms of metal element, based on 100 parts by mass of the infrared absorbing fine particles. More preferably, the amount is in a range of 1 part by mass or more and 500 parts by mass or less. Even more preferably, the amount is in a range of 10 parts by mass or more and 150 parts by mass or less.

This is because when the metal chelate compound or metal cyclic oligomer compound is 0.1 part by mass or more, the hydrolysis products of these compounds and the polymers of the hydrolysis products exhibit an effect of coating the surfaces of the infrared absorbing fine particles, thereby achieving the effect of improving heat and humidity resistance.

Further, when the metal chelate compound or metal cyclic oligomer compound is 1000 parts by mass or less, an excessive amount of adsorption on the infrared absorbing fine particles, can be avoided. Further, the improvement in heat and humidity resistance due to surface coating does not reach saturation, and an improvement in a coating effect can be expected.

This is because by containing 1000 parts by mass or less of the metal chelate compound or metal cyclic oligomer compound, an amount of adsorption on the infrared absorbing fine particles becomes excessive, and it is possible to avoid easy granulation of fine particles through the hydrolysis product of the metal chelate compound or metal cyclic oligomer compound or the polymer of the hydrolysis product when removing a medium. Good transparency can be ensured by avoiding the undesired granulation of fine particles.

In addition, it is also possible to avoid an increase in a production cost due to an increase in the addition amount and processing time due to an excess of the metal chelate compound or metal cyclic oligomer compound. Therefore, also from an industrial viewpoint, the addition amount of the metal chelate compound or metal cyclic oligomer compound is preferably 1000 parts by mass or less.

### [3] Method for surface coating of infrared absorbing fine particles

In the method for surface coating of the infrared absorbing fine particles according to this embodiment, first, an infrared absorbing fine particle dispersion liquid for forming a coating film (in this embodiment, it may be described as a "a coating film-forming dispersion liquid.") is prepared, in which infrared absorbing fine particles are dispersed in a suitable medium. Then, a surface treatment agent is added to the prepared coating film-forming dispersion liquid and mixed and stirred. Then, the surfaces of the infrared absorbing fine particles are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound. Thus, the surface-treated infrared absorbing fine particles according to this embodiment can be obtained. In the process of coating the surfaces of the infrared absorbing fine particles, the coating film-forming dispersion liquid into which the surface treatment agent is added, becomes a ripening liquid, which will be described later.

Here, explanation will be given for the method for surface coating of infrared absorbing fine particles, in the following order: (1) Surface coating method using a coating film-forming dispersion liquid, and (2) Surface coating method using a coating film-forming dispersion liquid with water as a medium, (3) Surface coating method using a coating film-forming dispersion liquid in which an addition amount of water is adjusted, and (4) Surface-treated infrared absorbing fine particles.

### (1) Surface coating method using a coating film-forming dispersion liquid

In the coating film-forming dispersion liquid according to this embodiment, it is preferable that the composite tungsten oxide, which is the infrared absorbing fine particles, be finely pulverized in advance and dispersed in an appropriate medium to form a monodisperse state. Then, during this pulverization and dispersion process, it is important to maintain a dispersed state and to prevent the fine particles from aggregating each other. This is to avoid the following situation: the fine particles cause aggregation, and surface-coating of the fine particles occurs in the state of the aggregation in the process of surface treatment of the infrared absorbing fine particles, and further, the aggregates remain in the infrared absorbing fine particle dispersion body described below, reducing the transparency of the infrared absorbing fine particle dispersion body and the infrared absorbing base material described below.

Accordingly, by performing pulverization and dispersion treatment to the coating film-forming dispersion liquid according to this embodiment, individual infrared absorbing fine particles can be uniformly and firmly coated with the hydrolysis product of the surface treatment agent and the polymer of the hydrolysis product when adding the surface treatment agent according to this embodiment.

Specific methods for the pulverization and dispersion treatment include, for example, a pulverization and dispersion treatment method using devices such as bead mills, ball mills, sand mills, paint shakers, and ultrasonic homogenizers. Among them, it is preferable to perform a pulverization and dispersion treatment using a media stirring mills such as bead mills, ball mills, sand mills, paint shakers, etc., using media such as beads, balls, and ottawa sand, because it takes a short time to reach a desired dispersed particle size.

### (2) Surface coating method using a coating film-forming dispersion liquid with water as a medium

The present inventors found that in the surface coating method using the above-described coating film-forming dispersion liquid, it is preferable that while stirring and mixing the coating film-forming dispersion liquid and the infrared absorbing fine particles using water as a medium, the surface treatment agent according to this embodiment is added thereto, and further a hydrolysis reaction of added metal chelate compound, and a hydrolysis reaction of added metal cyclic oligomer compound are immediately completed.

In this embodiment, the coating film-forming dispersion liquid may be referred to as "a coating film-forming dispersion liquid using water as a medium."

In this case, an influence of a reaction order of the added surface treatment agent according to this embodiment can be considered. That is, in the coating film-forming dispersion liquid using water as a medium, the hydrolysis reaction of the surface treatment agent always takes place first, followed by a polymerization reaction of the generated hydrolysis product. As a result, it is considered that the amount of carbon C remaining in the surface treatment agent molecules present in the coating film can be reduced compared to a case where water is not used as a medium. It is considered that a high-density coating film can be formed by reducing an amount of carbon C remaining in the surface treatment agent molecules present in the coating film.

In the above-described coating film-forming dispersion liquid using water as a medium, the metal chelate compound, metal cyclic oligomer compound, hydrolysis product thereof, polymer of the hydrolysis product may be decomposed into metal ions immediately after addition begins, but in that case, the decomposition of the metal ions ends when the solution becomes a saturated aqueous solution.

On the other hand, in the coating film-forming dispersion liquid using water as a medium, it is preferable that a dispersion concentration of the composite tungsten oxide in the coating film-forming dispersion liquid is 0.01% by mass or more and 80% by mass or less. When the dispersion concentration is within this range, the pH can be set to 8 or less, and the infrared absorbing fine particles according to this embodiment maintain their dispersion due to electrostatic repulsion.

As a result, it can be considered that the surfaces of all the infrared absorbing fine particles are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound, to generate the surface-treated infrared absorbing fine particles according to this embodiment. The coating film-forming dispersion liquid to which the surface treatment agent has been added becomes a ripening liquid, to form a coating film on the surface of the infrared absorbing fine particles.

The coating film of the surface-treated infrared absorbing fine particles according to this embodiment preferably has a thickness of 0.5 nm or more. This is because when the thickness of the coating film is 0.5 nm or more, it is considered that the surface-treated infrared absorbing fine particles exhibit sufficient moist heat resistance and chemical stability. On the other hand, from a viewpoint of ensuring that the surface-treated infrared absorbing fine particles have predetermined optical properties, it is considered that the thickness of the coating film is preferably 100 nm or less. Further, the film thickness is preferably 0.5 nm or more and 20 nm or less, more preferably 1 nm or more and 10 nm or less.

The thickness of the coating film can be measured using a transmission electron microscope, and the coating film covers areas of the surface-treated infrared absorbing fine particles without lattice fringes (arrangement of atoms in the crystal).

### (3) Surface coating method using a coating film-forming dispersion liquid in which an addition amount of water is adjusted

As a modified example of the above-described method for preparing a coating film-forming dispersion liquid using water as a medium, there is also a method in which an organic solvent is used as a medium for the coating film-forming dispersion liquid, and the above-described reaction order is achieved while adjusting an addition amount of water to an appropriate value. In this embodiment, the coating film-forming dispersion liquid may be described as "a coating film-forming dispersion liquid with an organic solvent as a medium."

This preparation method is also convenient when it is desired to reduce an amount of water contained in the coating film-forming dispersion liquid for convenience in subsequent steps.

Specifically, the surface treatment agent according to this embodiment and pure water are dropped in parallel while stirring and mixing the coating film-forming dispersion liquid with an organic solvent as a medium, and the infrared absorbing fine particles. At this time, a medium temperature, which affects a reaction rate, and a dropping rate of the surface treatment agent and pure water are appropriately controlled. The organic solvent may be any alcohol-based, ketone-based, glycol-based solvent, etc., as long as it dissolves in water at room temperature, and various solvents can be selected.

### (4) Surface-treated infrared absorbing fine particles

The surface-treated infrared absorbing fine particles according to this embodiment obtained by the surface coating method using the above-described coating film-forming dispersion liquid, can be used in particulate form or dispersed state in liquid or solid media, as a raw material for an infrared absorbing fine particle dispersion body and an infrared absorbing base material.

That is, the generated surface-treated infrared absorbing fine particles do not require further heat treatment to increase density and chemical stability of the coating film. This is because heat resistance is imparted by addition of a silicon compound, which will be described later.

For the purpose of obtaining a powder of surface-treated infrared absorbing fine particles from the coating film-forming dispersion liquid, and for the purpose of drying the obtained powder of the surface-treated infrared-absorbing fine particles, etc., it is possible to heat-treat the coating film-forming dispersion liquid (ripening liquid) or heat-treat a surface-treated infrared absorbing fine particle powder to which a surface treatment agent has been added. However, in this case, care must be taken to ensure that a heat treatment temperature does not exceed a temperature at which the surface-treated infrared absorbing fine particles strongly aggregate to form strong aggregates.

This is because the surface-treated infrared absorbing fine particles according to this embodiment are often required to have transparency due to their intended use in an ultimately used infrared absorbing fine particle dispersion body and an infrared absorbing base material. When an infrared absorbing fine particle dispersion body or an infrared absorbing base material is produced using an aggregate as an infrared absorbing material, this results in a product with a high degree of cloudiness (haze). If the heat treatment is performed at a temperature exceeding the temperature that forms strong aggregates, the strong aggregates are required to be crushed and redispersed using a dry method or/and a wet method in order to ensure the transparency of the infrared absorbing fine particle dispersion body and the infrared absorbing base material. However, the coating film on the surface of the surface-treated infrared absorbing fine particles may be damaged during the crushing and redispersion, and in some cases, a part of the coating film may peel off and the surface of the fine particles may be exposed.

As described above, the surface-treated infrared absorbing fine particles according to this embodiment do not require heat treatment after the treatment after mixing and stirring, so they do not cause strong aggregation, and therefore, dispersion treatment for crushing strong aggregates is not necessary or can be done in a short time. As a result, the coating film of the surface-treated infrared absorbing fine particles according to this embodiment remains a coating condition on each individual infrared absorbing fine particle without being damaged.

Further, as described above, by reducing an amount of carbon C remaining in the surface treatment agent molecules present in the coating film, a high-density coating film can be formed. From this viewpoint, in the surface-treated infrared-absorbing fine particle powder comprising the surface-treated infrared absorbing fine particles, the carbon concentration contained therein is preferably 0.2% by mass or more and 5.0% by mass or less. More preferably, it is 0.5% by mass or more and 3.0% by mass or less.

### [4] Silicon compound addition and infrared absorbing composite fine particles

By adding a silicon compound to the surface-treated infrared absorbing fine particles according to this embodiment, the infrared absorbing composite fine particles according to this embodiment can be obtained.

The silicon compound added to the surface-treated infrared absorbing fine particles is not particularly limited, but preferably includes silica fine particles.

Then, the silica fine particles preferably have an average particle size of 10 nm to 50 nm. Such fine silica particles may be commercially available fine silica particles or fine silica particles synthesized by hydrolyzing an organosilicon compound. It is preferable that the average particle size of the silica fine particles is 50 nm or less because it does not adversely affect optical properties such as deterioration of the haze of the infrared absorbing fine particle dispersion body described below.

The surface-treated infrared absorbing fine particles become infrared absorbing composite fine particles by the presence of silicon compound fine particles such as silica fine particles in one or more locations selected from within the coating film, on the coating film, and the vicinity of the surface of the surface-treated infrared absorbing fine particles. Then, the coating film of the infrared absorbing composite fine particles is strengthened due to the presence of the silicon compound fine particles such as silica fine particles in one or more locations selected from within the coating film, on the coating film, and the vicinity of the surface of the infrared absorbing composite fine particles, so heat resistance is improved.

### [5] Silicon compound addition method

A silicon compound addition method includes: a method of adding a silicon compound in the process of adding a surface treatment agent to the coating film-forming dispersion liquid, that is, a method of adding the silicon compound in the process of synthesizing the surface-treated infrared absorbing fine particles; and a method of adding the silicon compound before removing the solvent by drying which is the treatment for synthesizing the surface-treated infrared-absorbing fine particles using the coating film-forming dispersion liquid (ripening solution) added with the surface treatment agent. The silicon compound can also be added when preparing the infrared absorbing fine particle dispersion liquid described later. An addition amount of the silicon compound is preferably 1% by mass or more and 30% by mass or less, and more preferably, it is 1% by mass or more and 20% by mass with respect to the infrared absorbing fine particles. When the addition amount of the silicon compound added to the surface-treated infrared absorbing fine particles is 1% by mass or more, heat resistance is exhibited. When the amount is 30% by mass or less, there will be no adverse effect on the optical properties such as deterioration of the haze of the infrared absorbing fine particle dispersion body. The content of the silicon compound can be calculated from the silicon quantitative results obtained by ICP (Inductively Coupled Plasma) analysis.

To add the silicon compound in the process of synthesizing the surface-treated infrared absorbing fine particles, the surface treatment agent and the silicon compound are added at the same time using the coating film-forming dispersion liquid (ripening liquid). As a result, it is possible to obtain the infrared absorbing composite fine particles in which a coating film is formed and a silicon compound is incorporated into the coating film.

There is a method for obtaining infrared absorbing composite fine particles in which a silicon compound is present in the vicinity of the surface of the infrared absorbing composite fine particles, by adding the silicon compound and removing a solvent by drying after the surface-treated infrared absorbing fine particles are obtained using a coating film-forming dispersion liquid (ripening liquid) added with a surface treatment agent.

Further, even when the silicon compound is added to the infrared absorbing fine particle dispersion liquid containing surface-treated infrared absorbing fine particles, it is possible to obtain the infrared absorbing composite fine particles in which the silicon compound is present in the vicinity of the surface of the infrared absorbing composite fine particles in the infrared absorbing fine particle dispersion body described below.

In the present invention, the vicinity of the surface of the infrared absorbing composite fine particles is a distance of 10 nm or less from the surfaces of the infrared absorbing composite fine particles. When the distance between the silicon compound and the infrared absorbing composite fine particles is 10 nm or less, it is considered that the heat resistance effect is exhibited.

Among these silicon compound addition methods, it is preferable to use the method of adding the silicon compound in the process of synthesizing the surface-treated infrared absorbing fine particles, or the method of adding the silicon compound before removing the solvent by drying in the surface-treated infrared absorbing fine particles whose surfaces are coated with a coating film-forming dispersion liquid (ripening liquid) added with a surface-treating agent. In these methods, in either case, a silicon compound dispersion liquid in which a silicon compound is dispersed in a solvent may be prepared and added to each dispersion liquid. This is because the silicon compound can be present at one or more locations selected from within the coating film, on the coating film, and the vicinity of the surface of the infrared absorbing composite fine particles.

When adding the silicon compound, it is preferable to prepare a silicon compound dispersion liquid in which the silicon compound is dispersed in a solvent. The method of adding the silicon compound dispersion liquid is selected depending on a dispersion medium of the dispersion liquid to be added. For example, when adding the silicon compound to a surface treatment agent, a silicon compound dispersion liquid that matches the solvent of the surface treatment agent is selected. When adding the silicon compound to the surface-treated infrared absorbing fine particle dispersion liquid, a silicon compound that has the same dispersion medium or is dispersed in a solvent that does not impair dispersibility, is selected.

Further, to obtain a silicon compound dispersion liquid, a collision-type high-pressure emulsifier (ultra high pressure homogenizer device) that causes fine particles moving at high speed in a solvent under high pressure to collide with each other or a high-pressure homogenizer that utilizes a turbulence effect when passing through a nozzle or the like can be used. Alternatively, a commercially available silicon compound dispersion liquid may be used.

### [6] Infrared absorbing fine particle dispersion liquid, infrared absorbing fine particle dispersion body, infrared absorbing base material, and articles obtained using infrared absorbing composite fine particles

The infrared absorbing fine particle dispersion liquid, infrared absorbing fine particle dispersion body, infrared absorbing base material, which are obtained using the infrared absorbing composite fine particles according to this embodiment and articles using them, will be described in the following order: (1) Infrared absorbing fine particle dispersion liquid, (2) Infrared absorbing fine particle dispersion body, (3) Infrared absorbing base material, and (4) Articles using infrared absorbing fine particle dispersion body or infrared absorbing base material.

### (1) Infrared absorbing fine particle dispersion liquid

The infrared absorbing fine particle dispersion liquid according to this embodiment is the liquid in which the infrared absorbing composite fine particles according to this embodiment are dispersed in a liquid medium. As the liquid medium, one or more types of liquid medium selected from organic solvents, oils and fats, liquid plasticizers, compounds that become polymerized by curing, and water can be used.

The infrared absorbing fine particle dispersion liquid according to this embodiment will be described in the following order: (i) Production method, (ii) Organic solvent to be used, (iii) Oil and fat to be used, (iv) Liquid plasticizer to be used, (v) Compound to be polymerized by curing to be used, (vi) Dispersant to be used, and (vii) Method for using infrared absorbing fine particle dispersion liquid.

### (i) Production method

To produce the infrared absorbing fine particle dispersion liquid according to this embodiment, the coating film-forming dispersion liquid after the above-described addition of the surface treatment agent and the silicon compound is dried by heating, drying, or by vacuum fluidized drying, spray drying, etc., at room temperature, under conditions that can avoid strong aggregation of infrared absorbing composite fine particles, to obtain an infrared absorbing composite fine particle powder according to this embodiment. Then, the infrared absorbing composite fine particle powder may be added to the above-described liquid medium and redispersed. Further, it is also preferable that the coating film-forming dispersion liquid after addition of the surface treatment agent and the silicon compound is separated into infrared absorbing composite fine particles and a medium, and the medium of the coating film-forming dispersion liquid is replaced with the medium of the infrared absorbing fine particle dispersion liquid (so-called solvent replacement), to produce an infrared absorbing fine particle dispersion liquid.

In the vacuum fluidized drying process, drying and crushing are performed simultaneously under a reduced pressure atmosphere, so a drying speed is fast and aggregation of the infrared absorbing composite fine particles can be avoided. Further, since the drying is performed under a reduced pressure atmosphere, volatile components can be removed even at relatively low temperature, and an amount of remaining volatile components can be minimized. Further, in the process of spray drying, secondary aggregation caused by a surface force of the volatile components is less likely to occur, and an infrared absorbing composite fine particle powder containing relatively non-secondary aggregated infrared absorbing composite fine particles can be obtained without performing a crushing treatment.

In the infrared absorbing composite fine particles contained in this infrared absorbing composite fine particle powder, as with the surface-treated infrared absorbing fine particle powder described above, the contained carbon concentration is preferably 0.2% by mass or more and 5.0% by mass or less, more preferably, 0.5% by mass or more and 3.0% by mass or less.

On the other hand, it is also preferable that the medium of the coating film-forming dispersion liquid and the medium of the infrared absorbing fine particle dispersion liquid are matched in advance, and after addition of the surface treatment agent and the silicon compound, the coating film-forming dispersion liquid is directly used as an infrared absorbing fine particle dispersion liquid.

### (ii) Organic solvent to be used

As the organic solvent used as the infrared absorbing fine particle dispersion liquid according to this embodiment, alcohol-based, ketone-based, hydrocarbon-based, glycol-based, water-based solvents, etc., can be used.
Specifically, alcohol-based solvents such as methanol, ethanol, 1-propanol, isopropanol, butanol, pentanol, benzyl alcohol, and diacetone alcohol;
ketone-based solvents such as acetone, methyl ethyl ketone, methyl propyl ketone, methyl isobutyl ketone, cyclohexanone, and isophorone;
ester-based solvents such as 3-methyl-methoxy-propionate;
glycol derivatives such as ethylene glycol monomethyl ether, ethylene glycol monoethyl ether, ethylene glycol isopropyl ether, propylene glycol monomethyl ether, propylene glycol monoethyl ether, propylene glycol methyl ether acetate, propylene glycol ethyl ether acetate;
amides such as formamide, N-methylformamide, dimethylformamide , dimethylacetamide, and N-methyl-2-pyrrolidone;
aromatic hydrocarbons such as toluene, and xylene; and
ethylene chloride, chlorobenzene, etc., can be used.

Among these organic solvents, in particular, dimethyl ketone, methyl ethyl ketone, methyl isobutyl ketone, toluene, propylene glycol monomethyl ether acetate, n-butyl acetate, etc., can be preferably used.

### (iii) Oil and fat to be used

The oil and fat used in the infrared absorbing fine particle dispersion liquid according to this embodiment is preferably a vegetable oil or a plant-derived oil.

As the vegetable oil, drying oils such as linseed oil, sunflower oil, tung oil, and eno oil; semi-drying oils such as sesame oil, cottonseed oil, rapeseed oil, soybean oil, rice bran oil, and poppy oil; and non-drying oils such as olive oil, coconut oil, palm oil, dehydrated castor oil, etc., can be used.

As compounds derived from the vegetable oils, fatty acid monoesters, ethers, etc., which are obtained by directly esterifying fatty acids of vegetable oils and monoalcohols, can be used.

Further, commercially available petroleum solvents can also be used as fats and oils.

As a commercially available petroleum solvent, Isopar (registered trademark) E, Exol (registered trademark) Hexane, Heptane, E, D30, D40, D60, D80, D95, D110, D130 (manufactured by ExxonMobil), etc., can be used.

### (iv) Liquid plasticizer to be used

As the liquid plasticizer used in the infrared absorbing fine particle dispersion liquid according to this embodiment, for example, plasticizers that are compounds of monohydric alcohols and organic acid esters, ester plasticizers such as polyhydric alcohol organic acid ester compounds, phosphoric acid plasticizers such as organic phosphoric acid plasticizers, etc., can be used. All of them are preferably liquid at room temperature.

Among them, a plasticizer which is an ester compound synthesized from a polyhydric alcohol and a fatty acid can be preferably used. The ester compound synthesized from the polyhydric alcohol and fatty acid is not particularly limited, and for example, glycol ester compounds, etc., obtained by a reaction between glycols such as triethylene glycol, tetraethylene glycol, tripropylene glycol, etc., and monobasic organic acids such as butyric acid, isobutyric acid, caproic acid, 2-ethylbutyric acid, heptylic acid, n-octylic acid, 2-ethylhexylic acid, pelargonic acid (n-nonylic acid), decylic acid, etc., can be used.

Also included are ester compounds of tetraethylene glycol, tripropylene glycol, and the above-described monobasic organic compounds.

Among them, fatty acid esters of triethylene glycol such as triethylene glycol dihexanate, triethylene glycol di-2-ethyl butyrate, triethylene glycol di-octanate, triethylene glycol di-2-ethyl hexanoate, etc., can be used. Further, fatty acid esters of triethylene glycol can also be preferably used.

### (v) Compound to be polymerized by curing to be used

The compound that is polymerized by curing and used in the infrared absorbing fine particle dispersion liquid according to this embodiment is a monomer or oligomer that forms a polymer by polymerization or the like.

Specifically, methyl methacrylate monomers, acrylate monomers, styrene resin monomers, etc. can be used.

The liquid medium described above can be used in combination of two or more types. Further, if necessary, an acid or alkali may be added to these liquid media to adjust pH.

### (vi) Dispersant to be used

In the infrared absorbing fine particle dispersion liquid according to this embodiment, in order to further improve the dispersion stability of the infrared absorbing composite fine particles and to avoid coarsening of the dispersed particle size due to reaggregation, it is also preferable to add various dispersant, surfactant, coupling agent, etc.

The dispersant, coupling agent, and surfactant can be selected according to the application, and it is preferable to have an amine-containing group, a hydroxyl group, a carboxyl group, a sulfo group, or an epoxy group as a functional group. These functional groups have an effect of adsorbing on the surface of the infrared absorbing composite fine particles, preventing aggregation and uniformly dispersing them. A polymeric dispersant having any of these functional groups in its molecule is more preferable.

Further, preferable dispersants include acrylic-styrene copolymer dispersants having functional groups. Among them, more preferable examples include an acrylic-styrene copolymer dispersant having a carboxyl group as a functional group and an acrylic dispersant having an amine-containing group as a functional group. The dispersant having an amine-containing functional group preferably has a molecular weight Mw of 2,000 to 200,000 and an amine value of 5 to 100 mgKOH/g. Further, the dispersant having a carboxyl group preferably has a molecular weight Mw of 2,000 to 200,000 and an acid value of 1 to 50 mgKOH/g.

Preferable specific examples of commercially available dispersants include: SOLSPERSE (registered trademark) manufactured by Japan Lubrizol (hereinafter the same) 3000, 5000, 9000, 11200, 12000, 13000, 13240, 13650, 13940, 16000, 17000, 18000, 20000, 21000, 24000SC, 24000GR, 2 6000, 27000, 28000, 31845, 32000, 32500, 32550, 32600, 33000, 33500, 34750, 35100, 35200, 36600, 37500, 38500, 39000, 41000, 41090, 53095, 55000, 56000, 7 1000, 76500, J180, J200, M387 etc. ; SOLPLUS (registered trademark) (same below) D510, D520, D530, D540, DP310, K500, L300, L400, R700, etc.; Disperbyk (registered trademark) manufactured by BYK Chemie Japan (same below) -101, 102, 103, 106, 107, 108, 109, 110, 111, 112, 116, 130, 140, 142, 145, 154, 161, 162 , 163, 164, 165, 166, 167, 168, 170, 171, 174, 180, 181, 182, 183, 184, 185, 190, 191, 192, 2000, 2001, 2009, 2020, 2025, 2050, 2070 , 2095, 2096, 2150, 2151, 2152, 2155, 2163, 2164, Anti-Terra (registered trademark) (same hereinafter)-U, 203, 204, etc.; BYK (registered trademark) (same below) - P104, P104S, P105, P9050, P9051, P9060, P9065, P9080, 051, 052, 053, 054, 055, 057, 063, 065, 066N, 067A, 077, 088, 141, 220S, 300, 302, 306, 307, 310, 315, 320, 322, 323, 325, 330, 331, 333, 337, 340, 345, 346, 347, 348, 350, 354, 355, 358N, 361N, 370, 375, 377, 378, 380N, 381, 392, 410, 425, 430, 1752, 4510, 6919, 9076, 9077, W909, W935, W940, W961, W966, W969, W972, W980, W985, W995, W996, W9010, Dynwet800, Siclean3700, UV3500, UV3510, UV3570, etc.; EFKA (registered trademark) manufactured by Efka Additives (hereinafter the same) 2020, 2025, 3030, 3031, 3236, 4008, 4009, 4010, 4015, 4020, 4046, 4047, 4050, 4055, 4060, 4080, 4300, 4310 , 4320, 4330, 4340, 4400, 4401, 4402, 4403, 4500, 5066, 5220, 6220, 6225, 6230, 6700, 6780, 6782, 7462, 8503, etc.; JONCRYL (registered trademark) manufactured by BASF Japan (the same applies hereinafter) 67, 678, 586, 611, 680, 682, 690, 819, -JDX5050, etc.; TERPLUS (registered trademark) manufactured by Otsuka Chemical Co., Ltd. (the same applies hereinafter) MD1000, D1180, D1130, etc.; Ajisper (registered trademark) manufactured by Ajinomoto Fine Techno (hereinafter the same) PB-711, PB-821, PB-822, etc.; Disparon (registered trademark) manufactured by Kusumoto Kasei Co., Ltd. (same below) 1751N, 1831, 1850, 1860, 1934, DA-400N, DA-703-50, DA-325, DA-375, DA-550, DA-705, DA -725, DA-1401, DA-7301, DN-900, NS-5210, NVI-8514L, etc.; Alphon (registered trademark) manufactured by Toagosei Co., Ltd. (same hereinafter) UH-2170, UC-3000, UC-3910, UC-3920, UF-5022, UG-4010, UG-4035, UG-4040, UG-4070, Rezeda (Registered trademark) (same hereinafter) GS-1015, GP-301, GP-301S, etc.; and Diernal (registered trademark) manufactured by Mitsubishi Chemical Corporation (same below) BR-50, BR-52, BR-60, BR-73, BR-77, BR80, BR-83, BR85, BR87, BR88, BR-90, BR-96, BR102, BR-113, BR116 etc.

### (vii) Method for using infrared absorbing fine particle dispersion liquid

The infrared absorbing fine particle dispersion liquid according to this embodiment produced as described above is applied to the surface of an appropriate base material to form a dispersion film thereon, and can be used as an infrared absorbing base material, which will be described later. That is, the dispersion film is a type of a dried solidified product of the infrared absorbing fine particle dispersion liquid.

Further, the infrared absorbing fine particle dispersion liquid can be dried and pulverized to obtain a powdered infrared absorbing fine particle dispersion body (it may also be described as "dispersion powder" in this embodiment.) according to this embodiment. That is, the dispersion powder is a type of the dried solidified product of the infrared absorbing fine particle dispersion liquid. The dispersion powder is a powder-like dispersion body in which infrared absorbing composite fine particles are dispersed in a solid medium (such as a dispersant), and is distinguished from the above-described infrared absorbing composite fine particle powder. Since the dispersion powder contains a dispersant, by mixing it with an appropriate medium, the infrared absorbing composite fine particles can be easily redispersed into the medium.

The dispersion powder can be used as a raw material for adding infrared absorbing composite fine particles in a dispersed state into an infrared absorbing product. That is, the dispersion powder in which the infrared absorbing composite fine particles according to this embodiment are dispersed in a solid medium may be dispersed again in a liquid medium and used as a dispersion liquid for an infrared absorbing product, or the dispersion powder may be kneaded into a resin for use as described later.

On the other hand, the infrared absorbing fine particle dispersion liquid in which the infrared absorbing composite fine particles according to this embodiment are mixed and dispersed in a liquid medium can be used in various applications utilizing photothermal conversion.

For example, a curable ink composition can be obtained by adding the infrared absorbing composite fine particles to an uncured thermosetting resin, or by dispersing the infrared absorbing composite fine particles according to this embodiment in an appropriate solvent, and then adding the uncured thermosetting resin. The curable ink composition has excellent adhesion to a base material when it is provided on a predetermined base material and cured by irradiation with rays such as infrared rays. Then, in addition to being used as a conventional ink, the curable ink composition becomes an optimal curable ink composition for a stereolithography method in which a predetermined amount is applied, and infrared rays and other electromagnetic waves are irradiated thereto to be cured and stacked to form a three-dimensional object.

### (2) Infrared absorbing fine particle dispersion body

The infrared absorbing fine particle dispersion body according to this embodiment is one in which the infrared absorbing composite fine particles according to this embodiment are dispersed in a solid medium. As the solid medium, a solid medium such as resin or glass, etc., can be used.

The infrared absorbing fine particle dispersion body according to this embodiment will be explained in the following order: (i) Production method and (ii) Heat resistance.

### (i) Production method

When the infrared absorbing composite fine particles according to this embodiment are kneaded into resin and molded into a film or board, it is possible to directly knead the infrared absorbing composite fine particles into the resin. Further it is also possible to mix the infrared absorbing fine particle dispersion liquid and a resin, or to add a powdered dispersion body in which the infrared absorbing composite fine particles are dispersed in a solid medium into a liquid medium and to mix it with the resin.

When the resin is used as the solid medium, it may be in the form of a film or board with a thickness of 0.1 µm to 50 mm, for example.

Generally, when the infrared absorbing composite fine particles according to this embodiment are kneaded into a resin, the mixture is heated and mixed at a temperature near a melting point of the resin (around 200 to 300°C).

In this case, further, it is also possible to mix the infrared absorbing composite fine particles with a resin to form pellets, and to form a film or board from the pellets using various methods. For example, the film or board can be formed by an extrusion molding method, an inflation molding method, a solution casting method, a casting method, etc. The thickness of the film or board at this time can be set appropriately depending on the purpose of use, and an amount of a filler (that is, an amount of the infrared absorbing composite fine particles according to this embodiment) relative to the resin is variable depending on the thickness of the base material and required optical properties and mechanical properties, and is generally preferably 50% by mass or less relative to the resin.

When the amount of the filler relative to the resin is 50% by mass or less, granulation of fine particles in the solid resin can be avoided, and good transparency can be maintained. Further, since the amount of the infrared absorbing composite fine particles used according to this embodiment can be controlled, it is also advantageous in terms of a cost.

On the other hand, the infrared absorbing fine particle dispersion body in which the infrared absorbing composite fine particles according to this embodiment are dispersed in a solid medium can also be used in the form of powder by further pulverizing the infrared absorbing fine particle dispersion body. When adopting this configuration, the infrared absorbing composite fine particles according to this embodiment are already sufficiently dispersed in the solid medium in the powdered infrared absorbing fine particle dispersion body. Accordingly, by dissolving the powdered infrared absorbing fine particle dispersion body as a so-called masterbatch in an appropriate liquid medium or kneading it with resin pellets, etc., a liquid or solid infrared absorbing fine particle dispersion body can be easily produced.

Further, the resin that becomes the matrix of the above-described film or board is not particularly limited and can be selected depending on the application. PET resin, acrylic resin, polyamide resin, vinyl chloride resin, polycarbonate resin, olefin resin, epoxy resin, polyimide resin, etc., can be used as a low-cost, highly transparent, and versatile resin. Further, fluororesin can also be used in consideration of a weather resistance.

### (ii) Heat resistance

When the dispersion body whose total light transmittance was set to around 85% was exposed to a high temperature atmosphere of 120°C for 125 hours, the infrared absorbing fine particle dispersion body according to this embodiment has a visible light transmittance change rate of 1% or less, a solar transmittance change rate of 3.5% or less, and more preferably a solar transmittance change rate of 3 % or less before and after the exposure, and has an excellent heat resistance.

### (3) Infrared absorbing base material

The infrared absorbing base material according to this embodiment has a dispersion film containing the infrared absorbing composite fine particles according to this embodiment formed on a surface of a predetermined base material.

By forming the dispersion film containing the infrared absorbing composite fine particles according to this embodiment on the surface of a predetermined base material, the infrared absorbing base material according to this embodiment has excellent heat resistance and chemical stability, and can be suitably used as an infrared absorbing material.

The infrared absorbing base material according to this embodiment will be described in the following order: (i) Production method and (ii) Heat resistance.

### (i) Production method

For example, the infrared absorbing composite fine particles according to this embodiment are mixed with a liquid medium including an organic solvent such as alcohol and water, a resin binder, and optionally a dispersant to obtain an infrared absorbing fine particle dispersion liquid. After applying the obtained infrared absorbing fine particle dispersion liquid to a surface of an appropriate base material, the liquid medium is removed or the liquid is cured, thereby making it possible to obtain an infrared absorbing base material in which an infrared absorbing fine particle dispersion body is directly laminated on the surface of the base material.

The resin binder component can be selected depending on the application, and examples thereof include ultraviolet curing resin, thermosetting resin, room temperature curing resin, thermoplastic resin, etc. On the other hand, the infrared absorbing fine particle dispersion liquid containing no resin binder component may be laminated on the surface of the base material, or after the lamination, the liquid medium containing a binder component may be applied onto a layer of the infrared absorbing fine particle dispersion body.

Specifically, examples include an infrared absorbing base material obtained by applying the infrared absorbing fine particle dispersion liquid in a liquid state on the surface of the base material and hardening the obtained coating film by an appropriate method, the infrared absorbing fine particle dispersion liquid being a dispersion liquid in which infrared absorbing composite fine particles are dispersed in one or more liquid media selected from an organic solvent, an organic solvent in which resin is dissolved, an organic solvent in which resin is dispersed, and water. Examples also include an infrared absorbing base material obtained by applying an infrared absorbing fine particle dispersion liquid in a liquid state containing a resin binder component, on the surface of the base material and hardening the obtained coating film by an appropriate method, and also included is an infrared absorbing base material obtained by applying a liquid infrared absorbing fine particle dispersion body on the surface of the base material and hardening the obtained coating film by an appropriate method, the liquid infrared absorbing fine particle dispersion body being a dispersion body in which an infrared absorbing fine particle dispersion body, in which infrared absorbing composite fine particles are dispersed in a powdered solid medium, is mixed in a predetermined medium. Of course, also included is an infrared absorbing base material obtained by applying an infrared absorbing fine particle dispersion liquid, which is a mixture of two or more of the various liquid infrared absorbing fine particle dispersion liquids, on the surface of the base material and hardening the obtained coating film by an appropriate method.

The material of the above-described base material is not particularly limited as long as it is transparent, but glass, resin board, resin sheet, and resin film are preferably used.

There are no restrictions on the resins used for a resin board, resin sheet, and resin film, as long as they do not cause defects in the surface condition or durability of the required board, sheet, and film. Examples include boards, sheets, and films including transparent polymers, for example, polyester-based polymers such as polyethylene terephthalate and polyethylene naphthalate; cellulose-based polymers such as diacetyl cellulose and triacetyl cellulose; polycarbonate-based polymers; acrylic polymers such as polymethyl methacrylate; styrenic polymers such as polystyrene and acrylonitrile-styrene copolymers, olefinic polymers such as polyethylene, polypropylene, polyolefins having cyclic or norbornene structures, and olefin polymers such as ethylene/propylene copolymers, vinyl chloride-based polymers; amide-based polymers such as aromatic polyamide; imide-based polymers; sulfone-based polymers; polyethersulfone-based polymers; polyether ether ketone-based polymers; polyphenylene sulfide-based polymers; vinyl alcohol-based polymers; vinylidene chloride-based polymers; vinyl butyral-based polymers; arylate-based polymers; polyoxymethylene-based polymers; epoxy polymers; as well as various binary, ternary copolymers, graft copolymers, and blends thereof. Particularly, polyester-based biaxially oriented films such as polyethylene terephthalate, polybutylene terephthalate, or polyethylene-2,6-naphthalate are more suitable in terms of mechanical properties, optical properties, heat resistance, and economic efficiency. The polyester-based biaxially oriented films may be copolymerized polyester-based films.

### (ii) Heat resistance

In the above infrared absorbing base material, when the infrared absorbing base material set at a total light transmittance of 85% was exposed to a high temperature atmosphere of 120°C for 125 hours, the change rate in visible light transmittance is 1% or less, the change rate in solar transmittance is 3.5% or less, and more preferably the change rate in solar transmittance is 3% or less before and after the exposure, and excellent heat resistance is exhibited.

### (4) Articles using infrared absorbing fine particle dispersion body or infrared absorbing base material

As described above, the infrared absorbing fine particle dispersion body and infrared absorbing base material according to this embodiment have excellent heat resistance and chemical stability. As a result, various infrared absorbing articles produced using the infrared absorbing fine particle dispersion body and infrared absorbing base material also have excellent heat resistance and chemical stability.

Therefore, these infrared absorbing articles are suitable for use in window materials, etc., which aim to block out infrared light while allowing in sufficient visible light, thereby maintaining brightness and suppressing indoor temperature rises, for example, in various buildings and vehicles.

### Example

Hereinafter, this embodiment will be specifically described with reference to examples. However, this embodiment is not limited to the following examples.

The dispersed particle size of fine particles in the dispersion liquid in examples and comparative examples was expressed as an average value measured using a particle size measuring device (ELS-8000 manufactured by Otsuka Electronics Co., Ltd.) based on a dynamic light scattering method. Further, a crystallite size was measured by powder X-ray diffraction method (θ-2θ method) using a powder X-ray diffraction device (X'Pert-PRO/MPD manufactured by PANalytical, Spectris Co., Ltd.), and calculated using a Rietveld method.

The thickness of the coating film of the infrared absorbing composite fine particles and the presence of silica fine particles was obtained from photographic data obtained using a transmission electron microscope (HF-2200 manufactured by Hitachi, Ltd.) at a magnification of 300,000 times, by reading the areas where the infrared absorbing fine particles had no lattice stripes as the coating film.

Silica content in the surface-treated infrared absorbing fine particle dispersion powder was determined by quantifying silicon by ICP emission spectrometry.

Visible light transmittance (VLT) and solar transmittance (ST21) were measured in accordance with ISO 9050 and JIS R 3106. Specifically, transmittance was measured using a spectrophotometer U-4100 manufactured by Hitachi High-Tech Co., Ltd., and calculated by multiplying it by a coefficient in accordance with a spectrum of sunlight.

A method for evaluating the heat resistance of an infrared absorbing sheet is to expose the infrared absorbing sheet having a visible light transmittance of about 85% to a high temperature atmosphere of 120°C for 125 hours, and it was determined that there was no problem when the change rate in solar transmittance was within 3.5%.

An optical property value of the infrared absorbing sheet here is a value that includes an optical property value of a resin sheet that is the base material.

### [Example 1]

28% by mass of hexagonal cesium tungsten bronze (Cs_{0.33}WO₃) powder (YM-01 manufactured by Sumitomo Metal Mining Co., Ltd.) with Cs/W (molar ratio) = 0.33 as infrared absorbing fine particles and 72% by mass of pure water were mixed to obtain a mixture, and this mixture was loaded into a paint shaker containing 0.3 mmϕZrO₂ beads, and pulverized and dispersed for 10 hours to obtain a dispersion liquid of Cs_{0.33}WO₃ fine particles according to example 1. A dispersed particle size of the Cs_{0.33}WO₃ fine particles in the obtained dispersion liquid was measured and found to be 100 nm. The settings for particle size measurement were such that a particle refractive index was 1.81 and a particle shape was non-spherical. Further, a background was measured using pure water, and a solvent refractive index was set to 1.33. Further, after removing the solvent from the obtained dispersion liquid, a crystallite size was measured and found to be 32 nm. The obtained dispersion liquid of Cs_{0.33}WO₃ fine particles and pure water were mixed to obtain a coating film-forming dispersion liquid A according to example 1 in which a concentration of Cs_{0.33}WO₃ fine particles was 14% by mass.

On the other hand, a diluted surface treatment agent liquid a was obtained by mixing 29.0% by mass of aluminum ethyl acetoacetate diisopropylate as an aluminum-based chelate compound and 71.0% by mass of isopropyl alcohol (IPA).

2000 g of the obtained coating film-forming dispersion liquid A was put into a beaker, and 1000 g of the diluted surface treatment agent liquid a was added dropwise thereto over 5 hours while stirring. After the diluted surface treatment agent liquid a was added dropwise, stirring was further performed at a temperature of 20°C for 24 hours to produce a ripening liquid according to example 1. In the ripening liquid, surface-treated infrared absorbing fine particles are formed. Subsequently, 112 g of 20% by mass silica fine particle aqueous dispersion liquid was added to 650 g of the ripening liquid, and a medium was evaporated from the ripening liquid by vacuum fluidized drying to obtain a powder (infrared absorbing composite fine particle powder) containing the infrared absorbing composite fine particles according to example 1. The infrared absorbing composite fine particles according to example 1 were observed with a TEM, and a state of the coating film was read. Then, it was confirmed that silica fine particles were present in the coating film covering lattice stripes and in the vicinity of the coating film. An aqueous silica dispersion liquid was obtained by dispersing fine silica particles with an average particle size of 20 nm and water as a solvent using a collision-type high-pressure emulsifier.

8% by mass of the infrared absorbing composite fine particles according to example 1, 24% by mass of the polyacrylate dispersant, and 68% by mass of toluene were mixed. The obtained mixture was loaded into a paint shaker containing 0.3 mmϕ ZrO₂ beads, and pulverized and dispersed for 1 hour to obtain an infrared absorbing fine particle dispersion liquid according to example 1. Subsequently, the medium was evaporated from this infrared absorbing fine particle dispersion liquid by vacuum fluidized drying to obtain an infrared absorbing fine particle dispersion powder according to example 1. The content of silica fine particles in the infrared absorbing fine particle dispersion powder was 4.8% by mass.

The infrared absorbing fine particle dispersion powder according to example 1 and the polycarbonate resin were dry blended so that the total light transmittance of the infrared absorbing sheet obtained later was about 85%. The obtained blend was kneaded at 290°C using a twin-screw extruder, extruded from a T-die, and made into a 0.75 mm thick sheet material by a calendar roll method to obtain an infrared absorbing sheet according to example 1. The infrared absorbing sheet is an example of an infrared absorbing fine particle dispersion body according to this embodiment.

Optical properties of the obtained infrared absorbing sheet according to example 1 were measured, and an initial visible light transmittance of the sheet used for atmosphere exposure was found to be 85.40%, and the solar transmittance was found to be 67.6%. The visible light transmittance after exposure to high temperature atmosphere was 85.47%, a solar transmittance was 68.59%, a change rate in visible light transmittance was 0.08%, and a change rate in solar transmittance was 1.46% after exposure to high temperature atmosphere.

### [Example 2]

The coating film-forming dispersion liquid A according to example 1 was subjected to vacuum fluidized drying to evaporate the medium from the ripening liquid to obtain a powder containing the surface-treated infrared absorbing fine particles according to example 2. 8% by mass of the surface-treated infrared absorbing fine particles according to example 2, 24% by mass of the polyacrylate dispersant, and 68% by mass of toluene were mixed. The obtained mixture was loaded into a paint shaker containing 0.3 mmϕ ZrO₂ beads, and pulverized and dispersed for 1 hour to obtain a surface-treated infrared absorbing fine particle dispersion liquid according to example 2. 26 g of 40% by mass silica fine particle toluene dispersion liquid was added to 700 g of this infrared absorbing fine particle dispersion liquid to obtain an infrared absorbing fine particle dispersion liquid according to example 2. The content of silica fine particles in the infrared absorbing fine particle dispersion powder was 3.2% by mass.

Infrared absorbing composite fine particles, infrared absorbing fine particle dispersion liquid, infrared absorbing fine particle dispersion powder, and infrared absorbing sheet according to example 2 were obtained by performing the same operation as in example 1 except that the infrared absorbing fine particle dispersion liquid according to example 2 was used, and the same evaluation as in example 1 was performed. Production conditions are shown in Table 1, and the evaluation results are shown in Table 2.

A toluene dispersion liquid of fine silica particles was obtained by dispersing fine silica particles having an average particle size of 20 nm and toluene as a solvent using a collision-type high-pressure emulsifier.

### [Example 3]

Infrared absorbing composite fine particles, infrared absorbing fine particle dispersion liquid, infrared absorbing fine particle dispersion powder, and infrared absorbing sheet according to example 3 were obtained by performing the same operation as in example 1, except that 75 g of the 20% by mass silica aqueous dispersion liquid was added to 650 g of the ripening liquid according to example 1, and the same evaluation as in example 1 was performed. The content of silica fine particles in the infrared absorbing fine particle dispersion powder was 4.1% by mass. Production conditions are shown in Table 1, and evaluation results are shown in Table 2.

### [Comparative example 1]

2000 g of the coating film-forming dispersion liquid A was put into a beaker, and 1000 g of the diluted surface treatment agent liquid a was added dropwise thereto over 5 hours while stirring strongly with a stirrer equipped with blades. After dropwise addition of the diluted surface treatment agent liquid a, stirring was further performed for 24 hours at a temperature of 20°C to produce a ripening liquid according to comparative example 1. Subsequently, the medium was evaporated from the ripening liquid by vacuum fluidized drying to obtain a powder containing surface-treated infrared-absorbing fine particles according to comparative example 1 (surface-treated infrared-absorbing fine particle powder). Silica fine particles were not contained in the infrared absorbing fine particle dispersion powder.

Surface-treated infrared absorbing fine particle powder, infrared absorbing fine particle dispersion liquid, infrared absorbing fine particle dispersion powder, and infrared absorbing sheet according to comparative example 1 were obtained by performing the same operation as in example 1 except that the surface-treated infrared absorbing fine particle powder according to comparative example 1 was used. and the same evaluation as in example 1 was performed. Production conditions are shown in Table 1, and evaluation results are shown in Table 2.

| | infrared absorbing fine particles | Coating film-forming dispersion liquid | | | | | Diluted surface treatment agent liquid | | | | | Dispersion powder | Matrix resin |
|---|---|---|---|---|---|---|---|---|---|---|---|---|---|
| | | | Pulverization and dispersion process | Addition amount | Dispersion medium | | Surface treatment agent | | IPA | Dropping amount | Dropping | Silicon compound dispersion liquid | |
| | | | | | | | Type | Addition amount | Addition amount | | Time | Addition amount | |
| | | | [h] | [mass%] | | | | [mass%] | [mass%] | [g] | [h] | [mass%] | |
| Example 1 | Hexagonal cesium tungsten bronze | A | 10 | 14 | Water | a | Aluminum ethyl acetoacetate diisopropylate | 29.0 | 71.0 | 1000 | 5 | 4.8 | Polycarbonate |
| Example 2 | | A | 10 | 14 | | a | | 29.0 | 71.0 | 1000 | 5 | 3.2 | |
| Example 3 | | A | 10 | 14 | | a | | 29.0 | 71.0 | 1000 | 5 | 4.1 | |
| Comparative example 1 | | A | 10 | 14 | | a | | 29.0 | 71.0 | 1000 | 5 | | |

| | Heat resistance test | | | | | |
|---|---|---|---|---|---|---|
| | Initial value | | 125 hours later | | Δ Visible light transmittance | Δ Solar transmittance |
| | Visible light transmittance | Solar transmittance | Visible light transmittance | Solar transmittance | | |
| | (%) | (%) | (%) | (%) | (%) | (%) |
| Example 1 | 85.40 | 67.60 | 85.47 | 68.59 | 0.08 | 1.46 |
| Example 2 | 83.29 | 61.43 | 83.95 | 63.45 | 0.79 | 3.29 |
| Example 3 | 83.83 | 62.81 | 84.24 | 64.35 | 0.49 | 2.45 |
| Comparative example 1 | 83.45 | 60.88 | 84.09 | 63.21 | 0.77 | 3.83 |

## Claims

1. Infrared absorbing composite fine particles whose surfaces are coated with a coating film containing one or more selected from a hydrolysis product of a metal chelate compound, a polymer of the hydrolysis product of the metal chelate compound, a hydrolysis product of a metal cyclic oligomer compound, and a polymer of the hydrolysis product of the metal cyclic oligomer compound,
wherein a silicon compound is present in one or more locations selected from within the coating film, on the coating film, and the vicinity of surfaces of the infrared absorbing composite fine particles.

2. The infrared absorbing composite fine particles according to claim 1, wherein the coating film has a thickness of 0.5 nm or more.

3. The infrared absorbing composite fine particles according to claim 1 or 2, wherein the metal chelate compound or the metal cyclic oligomer compound contains one or more metal elements selected from Al, Zr, Ti, Si, and Zn.

4. The infrared absorbing composite fine particles according to any one of claims 1 to 3, wherein the metal chelate compound or the metal cyclic oligomer compound has one or more selected from an ether bond, an ester bond, an alkoxy group, and an acetyl group.

5. The infrared absorbing composite fine particles according to any one of claims 1 to 4, wherein the silicon compound is silica fine particles.

6. The infrared absorbing composite fine particles according to any one of claims 1 to 5, wherein the infrared absorbing fine particles are infrared absorbing composite tungsten oxide fine particles expressed by a general formula MxWyOz (wherein, M is one or more elements selected from H, He, alkali metal, alkaline earth metal, rare earth element, Mg, Zr, Cr, Mn, Fe, Ru, Co, Rh, Ir, Ni, Pd, Pt, Cu, Ag, Au , Zn, Cd, Al, Ga, In, Tl, Si, Ge, Sn, Pb, Sb, B, F, P, S, Se, Br, Te, Ti, Nb, V, Mo, Ta, Re, Be , Hf, Os, Bi, I, and Yb, W is tungsten, O is oxygen, 0.001 ≤ x/y ≤ 1, 2.0 ≤ z/y ≤ 3. 0).

7. The infrared absorbing composite fine particles according to any one of claims 1 to 6, wherein a carbon concentration is 0.2% by mass or more and 5.0% by mass or less.

8. An infrared absorbing fine particle dispersion liquid in which the infrared absorbing composite fine particles according to any one of claims 1 to 7 are dispersed in a liquid medium.

9. The infrared absorbing fine particle dispersion liquid according to claim 8, wherein the liquid medium is one or more liquid medium selected from an organic solvent, oil and fat, a liquid plasticizer, a compound that becomes polymerized by curing, and water.

10. An infrared absorbing fine particle dispersion body in which the infrared absorbing composite fine particles according to any one of claims 1 to 7 are dispersed in a solid resin.

11. The infrared absorbing fine particle dispersion body according to claim 10, wherein the solid resin is one or more resins selected from fluororesin, PET resin, acrylic resin, polyamide resin, vinyl chloride resin, polycarbonate resin, olefin resin, epoxy resin, and polyimide resin.

12. An infrared absorbing fine particle dispersion body which is a dried solidified product of the infrared absorbing fine particle dispersion liquid according to claim 8 or 9.
